# EUROPÄISCHE PATENTSCHRIFT

(11) **EP 2 865 120 B1**
(45) Veröffentlichungstag und Bekanntmachung des Hinweises auf die Patenterteilung: **29.08.2018**
(21) Anmeldenummer: 13734369.5
(22) Anmeldetag: 26.06.2013
(51) Int. Cl.: H04L 1/00, H04L 1/16, H04L 1/18

(54) **DATENPAKET FÜR EINE BIDIREKTIONALE ÜBERTRAGUNG VON DATENPAKETEN BEI EINER DATENÜBERTRAGUNG ZWISCHEN EINEM ERSTEN UND EINEM ZWEITEN KOMMUNIKATIONSGERÄT SOWIE VERFAHREN ZUM ÜBERTRAGEN EINES SOLCHEN DATENPAKETES**
DATA PACKET FOR BIDIRECTIONAL TRANSMISSION OF DATA PACKETS IN THE CASE OF DATA TRANSMISSION BETWEEN A FIRST AND A SECOND COMMUNICATION DEVICE, AND METHOD FOR TRANSMITTING SUCH A DATA PACKET
PAQUET DE DONNÉES DESTINÉ À UNE TRANSMISSION BIDIRECTIONNELLE DE PAQUETS DE DONNÉES LORS D'UNE TRANSMISSION DE DONNÉES ENTRE UN PREMIER ET UN DEUXIÈME APPAREIL DE COMMUNICATION, AINSI QUE PROCÉDÉ PERMETTANT DE TRANSMETTRE UN TEL PAQUET DE DONNÉES

(30) Priorität: 26.06.2012 DE 102012210816
(43) Veröffentlichungstag der Anmeldung: 29.04.2015
(73) Patentinhaber: Siemens Aktiengesellschaft, 80333 München (DE)
(72) Erfinder: DREBINGER, Andreas, 91074 Herzogenaurach (DE)
(86) Internationale Anmeldenummer: PCT/EP2013/063353
(87) Internationale Veröffentlichungsnummer: WO 2014/001376

(56) Entgegenhaltungen:
- EP-A1- 1 780 926
- WO-A1-2004/084498
- WO-A2-2006/041891
- US-A1- 2010 205 499

## Beschreibung

Die Erfindung betrifft ein Datenpaket für eine bidirektionale Übertragung von Datenpaketen, insbesondere bei einer Master/Reserve-Konfiguration bei einem Automatisierungssystem, sowie ein Verfahren zum Übertragen eines solchen Datenpaketes.

Aus der EP 1 743 225 B1 ist eine Master/Reserve(Stand-by)-Konfiguration bei einem Automatisierungssystem zur Steuerung eines technischen Prozesses, wie einer Erzeugung von Energie, bekannt.

Hierbei ist ein Master-System (Master) über eine schnelle physikalische Kommunikationsverbindung, einem Ethernet, mit einem Stand-by- bzw. Reserve-System (Reserve) verbunden (redundante Master/Reserve-Konfiguration), wobei über die schnelle Kommunikationsverbindung bidirektional Daten - typischerweise in Form von Datenpaketen nach einem standardisierten Übertragungsprotokoll und typischerweise einmal pro Automatisierungszyklus - zwischen dem Master und der Reserve ausgetauscht werden.

Ein solches redundantes Master/Reserve-System mit zeitkritischen Aufgaben, wie hier bei dem Automatisierungssystem, erfordert, insbesondere im Fall des Automatisierungssystems, gerade bei dem Energieerzeugungsprozess, einen effizienten, zuverlässigen, kontrollierbaren bzw. kontrollierten und deterministischen Kommunikationsmechanismus für den bidirektionalen Austausch von Daten zwischen dem Master und der Reserve.

Wesentliche Anforderungen an den Datenaustausch sind hierbei im Detail:
a) zuverlässige, kontrollierte bzw. kontrollierbare und robuste Funktionsweise mit deterministischen Übertragungszeiten,
b) bidirektionaler Datenaustausch (Voll-Duplex),
c) kurze bzw. reduzierte Transferzeiten,
e) effiziente Nutzung von vorhandenen Betriebsmitteln, wie Rechenzeit u.ä, und Kommunikationsbandbreite,
f) Unterstützung von Punkt-Zu-Punkt-Verbindungen,
g) Nutzung von standardisierten Übertragungsprotokollen, z.B. Ethernet.

Es ist auch bekannt, einen Datenaustausch zwischen Kommunikationsteilnehmern/-geräten eines vernetzten Systems basierend auf TCP/IP oder ähnlichen Kommunikationsprotokollen entsprechend Schicht 4 oder höher gemäß einem OSI-Schichten- bzw. OSI-Referenzmodells zu realisieren.

Derartige Standardkommunikationsprotokolle auf Anwenderebene übernehmen zwar eine Transportkontrolle, beispeisweise über einen ständigen Austausch von entsprechenden Kontrollmitteilungen wie Quittierungstelegrammen, im System, haben jedoch einen komplexen und aufwendigen Protokoll-Stack und sind nicht deterministisch.

Darüber hinaus erfordert ein nach diesen Mechanismen ablaufender Datenaustausch hohe Übertragungs- bzw. Transferzeiten, addiert sich hier eine gesamte Transferzeit für einen bidirektionalen Datenaustausch zwischen zwei Kommunikationsteilnehmern aus den Transferzeiten für beide Richtungen zwischen den Kommunikationsteilnehmern.

Diverse Echt-Zeit-Erweiterungen für die Datenübertragung adressieren zwar deterministische Übertragungszeiten, doch auch hier addiert sich die gesamte Transferzeit aus den Transferzeiten für die beiden Richtungen zwischen den Kommunikationsteilnehmer. Auch bedingen Echt-Zeit-Erweiterungen einen höheren Verwaltungsaufwand im System, haben Rückwirkungen auf das System und bringen so auch keinerlei Verbesserungen bezüglich Transferzeit und Effizienz.

Aus der WO 2006/041891 A2 ist eine Datenkommunikation zwischen einem ersten und einem zweiten Kommunikationsgerät, d.h. einem Transmitter und einem Receiver, bekannt. Dabei wird von dem Transmitter zunächst eine bestimmte Anzahl von "frames" an den Receiver gesandt. Diesen folgend sendet der Transmitter an den Receiver eine Quittierungsanforderung. Auf diese antwortet der Receiver mit einem Datenpaket, welches ausschließlich eine Quittierungsinformation zu allen bereits zuvor von dem Receiver bei dieser Datenübertragung empfangenen Datenpaketen enthält.

Aus der EP 1 780 926 A1 ist ein Datenpaket für eine Übertragung von Datenpaketen bei einer Datenübertragung zwischen einem ersten und einem zweiten Kommunikationsgerät bekannt. Das von dem ersten an das zweite Kommunikationsgerät übertragene Datenpaket enthält Nutzdaten und eine Quittierungsinformation zu allen bereits zuvor von dem ersten Kommunikationsgerät bei dieser Datenübertragung empfangenen Datenpaketen.

Der Erfindung liegt die Aufgabe zugrunde, eine bidirektionale Datenübertragung zwischen Kommunikationsteilnehmern/-geräten, insbesondere bei einem redundanten System mit zeitkritischen Aufgaben, wie bei einer Master/Reserve-Konfiguration bei einem Automatisierungssystem, zu verbessern.

Die Aufgabe wird durch ein Datenpaket für eine bidirektionale Übertragung von Datenpaketen bei einer Datenübertragung zwischen einem ersten und einem zweiten Kommunikationsgerät bzw. Kommunikationsteilnehmer sowie durch ein Verfahren zum Übertragen eines Datenpaketes bei einer bidirektionalen Übertragung von Datenpaketen bei einer Datenübertragung zwischen einem ersten und einem zweiten Kommunikationsgerät bzw. Kommunikationsteilnehmer mit den Merkmalen gemäß dem jeweiligen unabhängigen Patentanspruch gelöst.

Erfindungsgemäß ist vorgesehen, dass ein von einem ersten an ein zweites Kommunikationsgerät übertragenes Datenpaket eine Quittierungsinformation zu allen bereits zuvor von dem ersten Kommunikationsgerät bei dieser Datenübertragung empfangenen Datenpaketen enthält.

Erfindungsgemäß ist auch vorgesehen, dass ein von einem ersten an ein zweites Kommunikationsgerät zu übertragendes Datenpaket gebildet wird, welches eine Quittierungsinformation zu allen bereits zuvor von dem ersten Kommunikationsgerät bei dieser Datenübertragung empfangenen Datenpaketen enthält. Das derart gebildete Datenpaket wird dann von dem ersten Kommunikationsgerät an das zweite Kommunikationsgerät übertragen.

Vereinfacht ausgedrückt, die Erfindung sieht vor, dass ein - bei einer bidirektionalen Datenübertragung im Rahmen einer definierten bzw. festgelegten Datenüberragung bzw. (Daten-)Transfers zwischen zwei Kommunikationsteilnehmern - von einem Kommunikationspartner an den anderen Kommunikationsteilnehmer - übertragendes Datenpaket - neben zu übertragenen Nutzdaten - zusätzlich einen Quittierungsstatus aller bzw. eine Quittierungsinformation über alle bereits - vom anderen Kommunikationspartner an den Kommunikationsteilnehmer im Rahmen dieses definierten Transfers gesendete - empfangenen Datenpakete enthält.

Anders ausgedrückt, die Erfindung sieht einen simultanen Transfer von Nutzdaten und Quittierungsdaten - in dem erfindungsgemäßen Datenpaket - bidirektional zwischen zwei Kommunikationsteilnehmer vor, wobei die Quittierungsdaten einen Quittierungsstatus aller bereits - vom einen Kommunikationspartner an den anderen Kommunikationsteilnehmer im Rahmen eines festgelegten, definierten Transfers gesendete - empfangenen Datenpakete enthält.

Dabei sei bei der Erfindung unter einer Quittierungsinformation für ein bereits von einem Kommunikationsgerät/- teilnehmer empfangenes Datenpaket zu verstehen, dass eine solche Information - für dieses spezifische Datenpaket eindeutig - kennzeichnet, dass dieses spezifische Datenpaket vom zu empfangenden Kommunikationsgerät/-teilnehmer ordnungsgemäß empfangen wurde.

Zweckmäßig erfolgt eine solche eindeutige Kennzeichnung bzw. Quittierungsinformation, kurz auch nur "Paket-Quittung", zu einem bereits empfangenen Datenpaket in codierter Form, beispielsweise durch ein Bit (pro Datenpaket). Die Binärziffer "0" des Bits kann so beispielsweise für "nicht (ordnungsgemäß) empfangen"/"nicht quittiert" stehen bzw. ein solches Datenpaket kennzeichnen, wohingegen dann die Binärziffer "1" des Bits für "empfangen"/"quittiert" stehen kann bzw. ein solches Datenpaket kennzeichnen kann.

Besonders zweckmäßig ist es, die Quittierungsinformation für alle bereits empfangenen Datenpakete in Form einer Bitfolge zu gestalten, wobei der jeweilige implizite Bit-Index der Bitfolge der zugehörigen Datenpaketnummer entspricht.

Dadurch, d.h. durch den erfindungsgemäßen simultanen Transfer von Nutzdaten und erfindungsgemäßen Quittierungsdaten bzw. durch die erfindungsgemäß vorgesehene Quittierungsinformation in dem Datenpaket, ermöglicht die Erfindung, dass bei einem (Daten-)Transfer zwischen zwei Kommunikationsteilnehmern, beispielsweise bei einem Automatisierungszyklus bei einer redundanten Master/Reserve-Konfiguration bei einem Automatisierungssystem, keine separaten Quittierungstelegramme zu erhaltenen Daten bzw. über erhaltene Datenpakete mehr erforderlich sind.

Weniger, d.h. eine - durch den erfindungsgemäß erzielbaren Verzicht auf separate Quittierungstelegramme - verminderte Datenpaketanzahl, zwischen den Kommunikationsteilnehmern übertragene Datenpakete ermöglichen wiederum kürzere Transferzeiten bei einem bidirektionalen Datenaustausch.

Aufgrund der nicht mehr erforderlichen separaten Quittierungstelegramme und durch die dadurch möglichen kurzen Transferzeiten führt die Erfindung so zu einem optimierten, effizienten und effektiven Datenaustausch zwischen Kommunikationsteilnehmern.

Auch erreicht die Erfindung durch die - den aktuellen Übertragungsstatus des Datentransfers zwischen den Kommunikationsteilnehmern widerspiegelnde - Quittierungsinformation eine hohe Aktualität der Transferdaten bzw. bei dem Datentransfer. So ermöglicht die Erfindung auf einfache Weise, dass jeder Kommunikationsteilnehmer jederzeit Kenntnis davon erlangt, wie viele und welche Datenpakete in beiden (Kommunikations-)Richtungen bereits empfangen worden sind.

Auch lässt sich die Erfindung auf einfache Weise und/oder mit geringem Aufwand realisieren, sehen Datenpakete in der Regel einen standardisierten Aufbau bzw. Struktur vor, welcher bzw. welche durch die erfindungsgemäße Quittierungsinformation erweitert werden kann. Hierdurch lassen sich dann weiterhin einheitliche Paketstrukturen realisieren, welche sich im Rahmen standardisierter Kommunikationsdienste, wie OSI oder TCP/IP, einsetzen lassen.

Anders ausgedrückt, die Erfindung eignet sich in einfacher und effizienter Weise, um auf einen der Erfindung unterlagerten Standardkommunikationsdienst aufzusetzen, beispielsweise auf eine Kommunikation entsprechend einer Schicht 2 (Sicherungsschicht, Data Link) von OSI-Schichten bzw. eines OSI-Referenzmodells, bzw. um so standardisierte Übertragungsprotokolle, wie Ethernet, als unterlagerten Kommunikationsdienst zu nutzen.

Dieser unterlagerte Kommunikationsdienst kann dabei eine logische Verbindung zwischen den Kommunikationsgeräten mit den Datenpaketen inklusive einer elementaren Fehlererkennung bzw. eines elementaren Fehlerkorrekturmechanismus (z.B. zyklische Redundanzprüfung CRC) bereitstellen und die physikalische Adressierung von den Datenpaketen übernehmen. Alle darüber hinausgehenden Aufgaben, wie z.B. Quittierung, Paketwiederholung, Fehlererkennung, Redundanzmanagement etc., können durch die Erfindung übernommen bzw. zur Verfügung gestellt werden.

Die Erfindung ermöglicht so,
a) eine zuverlässige und robuste Funktionsweise mit deterministischen Übertragungszeiten bei einem Datenaustausch zwischen Kommunikationsteilnehmern,
b) einen bidirektionalen Datenaustausch (Voll-Duplex),
c) eine Reduzierung der Transferzeiten (durch ermöglichten Verzicht auf Quittierungstelegramme),
d) eine Unterstützung von redundanten Kommunikationsverbindungen zur Erhöhung der Verfügbarkeit und Bandbreite,
e) eine effiziente Nutzung der vorhandenen Betriebsmittel und Kommunikationsbandbreite durch Minimierung der Protokoll-Verwaltungsdaten und Parallelisierung der Datenübertragung,
f) eine Unterstützung von Punkt-Zu-Punkt-Verbindungen,
g) eine Nutzung von standardisierten Übertragungsprotokollen (z.B. Ethernet) als unterlagerter Kommunikationsdienst.

Bevorzugte Weiterbildungen der Erfindung ergeben sich auch aus den abhängigen Ansprüchen.

Die beschriebenen Weiterbildungen beziehen sich sowohl auf das Datenpaket als auch auf das Verfahren.

Die Erfindung und/oder die beschriebenen Weiterbildungen können - zumindest teilweise, wie auch im Gesamten - sowohl in Software als auch in Hardware, beispielsweise unter Verwendung einer speziellen elektrischen Schaltung, realisiert werden.

Ferner ist eine Realisierung der Erfindung und/oder einer beschriebenen Weiterbildung - zumindest teilweise, wie auch im Gesamten - möglich durch ein computerlesbares Speichermedium, auf welchem ein Computerprogramm gespeichert ist, welches die Erfindung oder die Weiterbildung ausführt.

Auch können die Erfindung und/oder die beschriebenen Weiterbildungen - zumindest teilweise, wie auch im Gesamten - durch ein Computerprogrammerzeugnis realisiert sein, welches ein Speichermedium aufweist, auf welchem ein Computerprogramm gespeichert ist, welches die Erfindung und/oder die Weiterbildungen ausführt.

Nach einer bevorzugten Weiterbildung ist vorgesehen, dass die Quittierungsinformation, kurz auch nur "Paket-Quittung", zu einem bereits empfangenen Datenpaket in codierter Form, beispielsweise durch ein Bit (pro Datenpaket) ausgeführt ist.

Die Binärziffer "0" des Bits kann so beispielsweise für "nicht (ordnungsgemäß) empfangen"/"nicht quittiert" stehen bzw. ein solches Datenpaket kennzeichnen, wohingegen dann die Binärziffer "1" des Bits für "empfangen"/"quittiert" stehen kann bzw. ein solches Datenpaket kennzeichnen kann.

Besonders zweckmäßig ist es, die Quittierungsinformation für alle bereits empfangenen Datenpakete in Form einer Bitfolge zu gestalten, wobei jedes Bit der Bitfolge einen Quittierungsstatus zu einem Datenpaket codiert. Der jeweilige implizite Bit-Index eines Bits der Bitfolge entspricht dabei der zugehörigen Datenpaketnummer des zugehörigen zu quittierenden Datenpaktes.

Nach einer weiteren bevorzugten Weiterbildung ist die Erfindung eingesetzt bei einem bidirektionalen Datentransfer von - einer Mehrzahl von, beispielsweise von zwei, drei, fünf, zehn, fünfzehn oder zwanzig, bzw. insbesondere einer Vielzahl von, beispielsweise von einhundert, mehreren Hunderten oder auch tausend bzw. Tausenden, erfindungsgemäßen - Datenpaketen zwischen zwei Kommunikationsteilnehmern, welche über, insbesondere zwei, drei oder auch mehrere, redundante (physikalische) Kommunikationsverbindungen miteinander verbunden sind. Mittels der Erfindung lassen sich so Anwender-/Nutzdaten - mittels der Mehrzahl oder insbesondere der Vielzahl von erfindungsgemäßen Datenpaketen - bidirektional zwischen den Kommunikationsteilnehmern übertragen.

So ist die Erfindung insbesondere geeignet für eine redundante Master/Reserve-Konfiguration bei einem Automatisierungssystem mit insbesondere zwei redundanten physikalischen Kommunikationsverbindungen zwischen dem Master-System und dem Reserve-System.

Das Automatisierungssystem kann zur Prozesssteuerung bei Prozessen zur Güterherstellung oder zur Energieerzeugung, beispielsweise bei Kraftwerken, eingesetzt sein.

Nach einer weiteren bevorzugten Weiterbildung kann auch vorgesehen sein, dass das Datenpaket einen Empfangszähler aufweist, welcher angibt, wie viele Datenpakete von einem Kommunikationsgerät bereits empfangen worden sind.

Besonderes vorteilhaft ist es, wenn - im Falle von mehreren redundanten physikalischen Kommunikationsverbindungen zwischen zwei Kommunikationsteilnehmern/-geräten bzw. einem ersten und einem zweiten Kommunikationsteilnehmer - jeweils ein Empfangszähler pro physikalische Kommunikationsverbindung in dem Datenpaket vorgesehen ist. Ein solcher, jeweiliger Empfangszähler gibt dann an, wie viele Datenpakete über die jeweilige physikalische Kommunikationsverbindung von einem Kommunikationsgerät bereits empfangen worden sind.

Anders ausgedrückt, hier, d.h. bei redundanten physikalischen Kommunikationsverbindungen zwischen zwei Kommunikationsteilnehmern/-geräten, kann auch vorgesehen werden, dass das - bei einem Kommunikationsteilnehmer gebildete - Datenpaket einen Empfangszähler pro physikalische Kommunikationsverbindung zwischen dem ersten und dem zweiten Kommunikationsteilnehmer bzw. -gerät aufweist, welcher jeweils angibt, wie viele Datenpakete von dem Kommunikationsteilnehmer bzw. -gerät über die jeweilige physikalische Kommunikationsverbindung (gesendet von dem anderen Kommunikationsteilnehmer) bereits empfangen worden sind.

Vereinfacht und anschaulich dargestellt, ein solcher Empfangszähler pro physikalischer Kommunikationsverbindung in einem bei einem Kommunikationsteilnehmer gebildeten Datenpaket wird beim Empfang eines Datenpakets über diese Kommunikationsverbindung durch diesen empfangenden Kommunikationsteilnehmer erhöht und an den anderen Kommunikationsteilnehmer (zurück-)transferiert. So ist dieser andere Kommunikationsteilnehmer informiert, über welche Kommunikationsverbindung (wie viele) Datenpakete bereits empfangen worden sind.

Nach einer anderen bevorzugten Weiterbildung ist vorgesehen, dass das Datenpaket nach einem Kommunikationsdienst, der einen Austausch von Datenpaketen mit einer festen Länge zur Verfügung stellt, insbesondere nach einer unterlagerten Kommunikation entsprechend einer Schicht 2 eines OSI-Referenzmodells, zwischen den Kommunikationsgeräten/- teilnehmern übertragen wird. Vereinfacht ausgedrückt, die Erfindung nützt hier die durch diesen unterlagerten Kommunikationsdienst zur Verfügung gestellten Dienste, wie die Erstellung der logischen Verbindung, elementare Fehlererkennung und elementare Fehlerkorrektur sowie physikalische Adressierung von Datenpaketen, wohingegen alle darüber hinausgehenden Aufgaben, wie insbesondere Quittierung, aber auch eine Paketwiederholung, Fehlererkennung, Redundanzmanagement durch die Erfindung erfolgt.

So kann nach einer bevorzugten Weiterbildung auch vorgesehen sein, dass das Datenpaket nach einem standardisierten Übertragungsprotokoll, insbesondere nach einem Ethernet-Protokoll, übertragen wird.

Weiterhin kann nach einer bevorzugten Weiterbildung auch vorgesehen sein, dass die Erfindung sowohl bei einer Erstsendung von erfindungsgemäßen Datenpaketen, als auch bei einer Wiederholungssendung von nicht quittierten, erstgesendeten Datenpaket eingesetzt wird.

Insbesondere kann - im Falle mehrerer physikalischer Kommunikationsverbindungen zwischen dem ersten und dem zweiten Kommunikationsgerät - die erneute Sendung des nicht quittierten Datenpaketes über eine andere physikalische Kommunikationsverbindung als bei der Erstsendung erfolgen.

Besonders bevorzugt kann hier vorgesehen sein, dass ein nicht quittiertes Datenpaket erst dann erneut gesendet wird, wenn alle Datenpakte zuvor ein erstes Mal gesendet wurden. Vereinfacht ausgedrückt, die Wiederholungssendung(-en) beginnt bzw. beginnen erst nach Abschluss der Erstsendung aller Datenpakete.

Auch kann bevorzugt bei einer Weiterbildung vorgesehen sein, dass, wenn alle Datenpakete der Datenübertragung von den Kommunikationsgeräten empfangen wurden, d.h. alle Datenpakete wurden quittiert, ein finales Datenpaket von dem ersten zu dem zweiten Kommunikationsgerät gesendet wird.

Dieses finale Datenpaket wird bevorzugt - im Falle mehrerer das erste mit dem zweiten Kommunikationsgerät verbindenden Kommunikationsverbindungen - über alle diese mehreren Kommunikationsverbindungen gesendet.

Nach einer weiteren bevorzugten Weiterbildung ist vorgesehen, dass das Datenpaket von einem Kommunikationsgerät erst dann gebildet wird, wenn ein von dem anderen Kommunikationsgerät an das Kommunikationsgerät gesendetes, insbesondere gesendetes erstes, Datenpaket dort angekommen ist. Insbesondere kann hier vorgesehen sein, dass das Datenpaket von einem passiven Kommunikationsgerät erst gebildet wird, wenn ein von einem aktiven Kommunikationsgerät an das passive Kommunikationsgerät gesendetes, insbesondere gesendetes erstes, Datenpaket dort angekommen ist. Hierdurch wird die Aktualität der vom passiven an den aktiven Kommunikationsteilnehmer gesendeten Daten erhöht.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

In Figuren ist ein Ausführungsbeispiel der Erfindung dargestellt, welche im Weiteren näher erläutert werden. Gleiche Bezugszeichen in den Figuren bezeichnen technisch gleiche Elemente.

Es zeigen:
- FIG 1: eine redundante Master/Reserve-Konfiguration bei einem Automatisierungssystem mit zwei physikalischen Kommunikationsverbindungen zwischen dem Master-System und dem Reserve-System,
- FIG 2: eine Paket- bzw. Datenstruktur eines Datenpaketes für den Datenaustausch bei der Master/Reserve-Konfiguration gemäß einem Ausführungsbeispiel,
- FIG 3: eine in einer Bitfolge codierte Quittierungsinformation bei einem Datenpaket gemäß einem Ausführungsbeispiel,
- FIG 4: Verfahrensschritte bei einem bidirektionalen Datenaustausch bei der Master/Reserve-Konfiguration gemäß einem Ausführungsbeispiel (Kommunikationsablauf) .

Ausführungsbeispiel: Bidirektionales Kommunikationsverfahren 60 bei einer Master/Reserve-Konfiguration 61 eines redundanten Master-/Reserve-Systems 3, 4 bei einem Automatisierungssystem 62

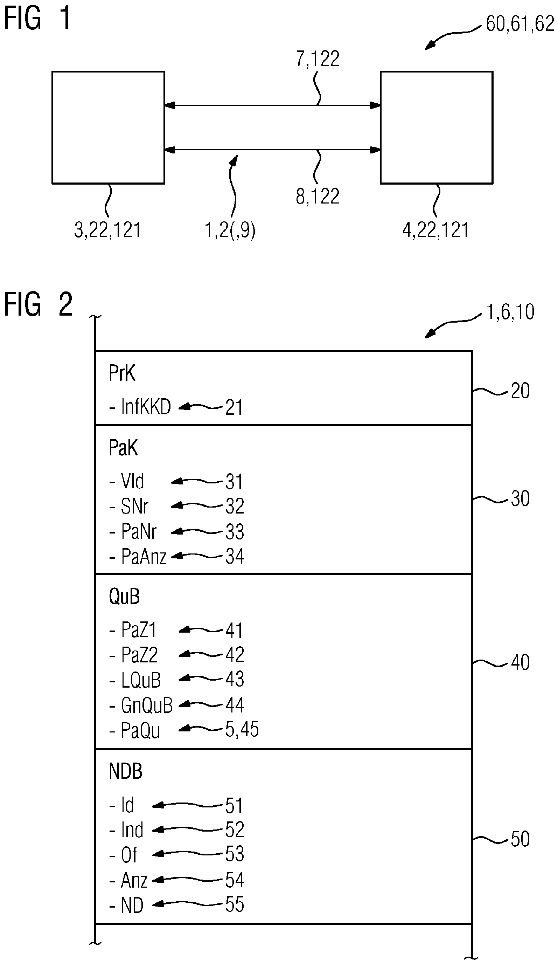

FIG 1 zeigt eine redundante Master/Reserve-Konfiguration 61 bei einem Automatisierungssystem 62 mit zwei physikalischen Kommunikationsverbindungen 7, 8 zwischen zwei redundanten Systemen, dem Master-System 3, kurz auch nur (erster) Kommunikationsteilnehmer/-gerät oder nur Master 3, und dem Reserve-System 4, kurz auch nur (zweiter) Kommunikationsteilnehmer/-gerät oder nur Reserve 4.

Wie FIG 1 zeigt, ist das Master-System 3 über zwei redundante physikalische Kommunikationsverbindungen 7, 8 mit dem Reserve-System 4 verbunden.

Über die beiden redundanten Kommunikationsverbindungen 7, 8 werden Daten - in Form von Datenpaketen 1 - zwischen dem Master 3 und der Reserve 4 bidirektional ausgetauscht.

Bei einem solchen Automatisierungssystem 62 mit der redundanten Master/Reserve-Konfiguration 61 ist das (aktuelle) Master-System 3 typischerweise der aktive und das (aktuelle) Reserve-System 4 typischerweise der zunächst passive Kommunikationspartner, wobei typischerweise einmal pro Automatisierungszyklus Daten zwischen dem Master 3 und der Reserve 4 ausgetauscht werden, im Folgenden nur Transfer 2.

Hierbei werden in der Regel vom Master 3 zur Reserve 4 wesentlich mehr Daten übertragen, als in die umgekehrte Richtung.

Redundante Systeme mit zeitkritischen Aufgaben, wie vorliegend das Master-/Reserve-System 3, 4 des Automatisierungssystems 62, erfordern einen effizienten und deterministischen Kommunikationsmechanismus 60 für den bidirektionalen Austausch 2 von Daten zwischen Master 3 und Reserve 4.

FIG 2, FIG 3 und FIG 4 verdeutlichen einen solchen geforderten, effizienten und deterministischen Kommunikationsmechanismus 60 für den bidirektionalen Austausch 2 von Daten zwischen dem Master 3 und der Reserve 4.

Der Kommunikationsmechanismus 60 setzt auf einen unterlagerten Kommunikationsdienst 9 auf, der den transparenten Austausch von Datenpaketen mit einer festen Länge zur Verfügung stellt, typischerweise einer Kommunikation entsprechend der Schicht 2 (Sicherungsschicht, Data Link) des OSI-Schichten bzw. OSI-Referenzmodells.

Dieser unterlagerte Kommunikationsdienst 9 bzw. nur kurz die unterlagerte Kommunikation 9 stellt eine logische Verbindung mit Datenpaketen inklusive einer elementaren Fehlererkennung bzw. eines elementaren Fehlerkorrekturmechanismus (z.B. zyklische Redundanzprüfung CRC) bereit und übernimmt die physikalische Adressierung von den Datenpaketen 1.

Alle darüber hinausgehenden Aufgaben, wie z.B. Quittierung, Paketwiederholung, Fehlererkennung, Redundanzmanagement etc., übernimmt der Kommunikationsmechanismus 60.

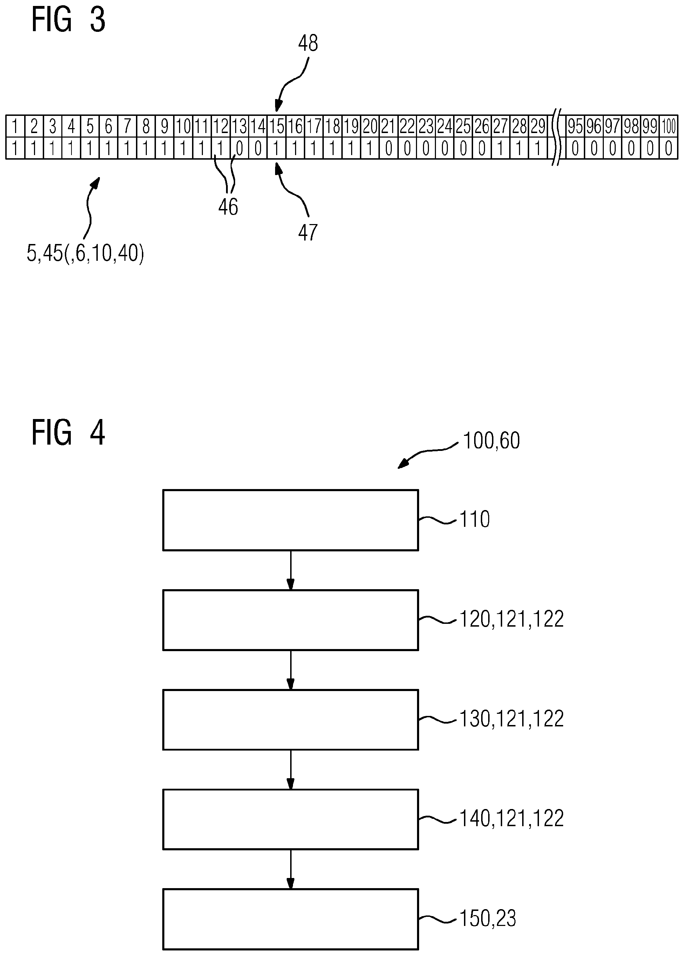

Wesentlich bei dem Kommunikationsmechanismus 60 ist, dass keine separaten Quittungstelegramme - zwischen den Kommunikationsteilnehmern 3, 4 - für die Kommunikation erforderlich sind. Jedes zwischen den Kommunikationsteilnehmern 3, 4 bzw. dem Master 3 und der Reserve 4 transferierte Datenpaket 1 enthält den Quittungsstatus 5, 45 bzw. die Quittierungsinformation 5, 45 über aller bereits vom jeweiligen Kommunikationsteilnehmer 3, 4 empfangenen Datenpakete 1 (vgl. FIG 2 und FIG 3) .

Die Größe eines einzelnen Telegramm-/Datenpaketes 1 ergibt sich aus dem unterlagerten Kommunikationsdienst 9.

In jedem Datenpaket 1 wird ein Bereich, ein Quittierungsbereich 40 reserviert, in dem später der Quittierungsstatus 5, 45 bzw. die Quittungsinformation 5, 45 des zugehörigen Datenpaketes 1 - über aller bereits vom jeweiligen Kommunikationsteilnehmer 3, 4 empfangenen Datenpakete 1 - hinterlegt werden können. Hierfür genügt ein Bit 46 pro Datenpaket 1.

FIG 2 zeigt die Paket- bzw. Datenstruktur 10 eines solchen Datenpaketes 1 für den Datenaustausch 2 bei der Master/Reserve-Konfiguration 61 nach dem Kommunikationsmechanismus 60.

Das Datenpaket 1 umfasst, wie FIG 2 verdeutlicht, als wesentliche Bereiche: (1) einen Protokollkopf PrK 20, (2) einen Paketkopf PaK 30, (3) einen Quittierungsbereich QuB 40 mit u.a. der Quittierungsinformation 5 sowie (4) einen Nutzdatenbereich NDB 50.

### (1) Protokollkopf PrK 20

Der Protokollkopf 20 enthält spezifische Informationen basierend auf dem unterlagerten Kommunikationsdienst 21, hier z.B. Ethernet, und ist für das beschriebene Kommunikationsprotokoll 6 transparent.

### (2) Paketkopf PaK 30

Der Paketkopf 30 enthält, wie FIG 2 zeigt, die folgenden Komponenten:
- Verbindungs-Id VId zur eindeutigen Identifizierung der zugehörigen logischen Datenverbindung 31,
- Sequenz-Nr SNr zur Konsistenzprüfung der Datenübertragung aufeinanderfolgender Transfers (Anwenderpaket) 32
- Paket-Nr PaNr identifiziert das aktuelle, übertragene Daten-/Telegrammpaket zur gegebenen Sequenz-Nr 33
- Paket-Anzahl PaAnz spezifiziert die Anzahl der zu übertragenen Daten-/Telegrammpakete des aktuellen Tranfers 34

### (3) Quittierungsbereich QuB 40

Der Quittungsbereich 40 enthält, wie FIG 2 zeigt, folgende Komponenten:
- Empfangszähler PaZ1, PaZ2 pro physikalische Kommunikationsverbindung 7, 8 (typischerweise und hier zwei 7, 8 (vgl. FIG 1), d.h. einen ersten PaZ1 41 und einen zweiten Empfangszähler PaZ2 42) 41, 42.
   Dieser Empfangszähler 41, 42 wird beim Empfang eines Datenpaketes 1 durch einen Kommunikationsteilnehmer 3, 4 über die jeweilige Kommunikationsverbindung 7, 8 erhöht und - mit aktuellem Empfangszählerstand - an den anderen Kommunikationsteilnehmer 3, 4 zurücktransferiert 2.
- Maximale Länge LQub 43 und aktuell verwendete Länge GnQuB 44 des nachfolgenden Bereichs mit der paketspezifischen Quittungsinformation 5, 45.
   Die maximale Länge 43 ergibt sich aus der maximalen Datenpaketanzahl; die genutzte Länge 44 ergibt sich aus der tatsächlichen Paketanzahl des aktuellen Transfers/Anwenderpaketes.
- Quittierungsinformation/Quittierungsstatus PaQu 5, 45
   Der Quittierungsstatus 5, 45 wird gebildet durch eine Bitfolge 47, deren Bitanzahl der maximalen Datenpaketanzahl entspricht. Jedes Bit 46 der Bitfolge 47 repräsentiert ein spezifisches Datenpaket 1 (spezifische Paketquittung), wobei der implizite Bit-Index 48 der zugehörigen Datenpaketnummer entspricht (vgl. FIG 3).

### (4) Nutzdatenbereich NDB 50

Der Nutzdatenbereich 50 kann prinzipiell frei strukturiert werden.

Es muss lediglich gewährleistet werden, dass auf Seiten des sendenden Kommunikationsteilnehmers 3, 4 (Sendeseite) die zu übertragenden Daten in die Datenpakete 1 aufgeteilt werden und auf Seiten des empfangenden Kommunikationsteilnehmers 3, 4 (Empfängerseite) die übertragenen Datenpakete 1 und deren Information wieder korrekt zugeordnet werden.

Typischerweise handelt es sich hierbei um linear adressierte Daten, wie bspw. Byte Arrays.

Der Nutzdatenbereich 50 enthält, wie FIG 2 zeigt, folgende Komponenten:
- Id 51 für die Nutzdaten ND 55
- Index Ind 52 für die Nutzdaten ND 55
- Offset Of 53 für die Nutzdaten ND 55
- Anzahl der Nutzdaten ND 55
- Nutzdaten bzw. Paketdaten ND 55

Die Datenpaketstruktur (vgl. FIG 2 und FIG 3) bei dem Kommunikationsmechanismus 60 ist dahingehend optimiert, dass nur ein sehr kleiner Anteil eines Datenpaketes 1 für Verwaltungsdaten benötigt wird, hier weniger als 1% pro Datenpaket 1.

So werden bei einer Paketlänge von 16000 Byte, im Falle der Verwendung von Ethernet als unterlagerten Kommunikationsdienst 9, zum Übertragen von 1 MB Daten pro Richtung weniger als 30 Byte für die gesamte Datenprotokollverwaltung inklusive der Paketquittungen bzw. der Quittierungsinformation 5, 45 und Redundanzinformationen pro Paket benötigt (< 0,2%).

Aus der Paketanzahl und der Übertragungsgeschwindigkeit pro Datenpaket 1 bzw. Paketanzahl pro Zeiteinheit des unterlagerten Kommunikationsdienstes 9 kann die typische Transferzeit des Transfers 2 (Anwenderpakets) ermittelt werden.

FIG 3 verdeutlicht die in einer Bitfolge 47 codierte Quittierungsinformation 5, 45 bei einem Datenpaket 1 bei dem Kommunikationsmechanismus 60.

Die dargestellte Bitfolge 47 umfasst eine Abfolge von 100 Bits 46, wodurch maximal 100 einzelne, spezifische Datenpakete 1 quittiert werden können. Der implizite Bit-Index 48 der Bitfolge 47 entspricht der zugehörigen Datenpaketnummer des zu quittierenden Datenpakets 1.

Die Binärziffer "0" eines Bits 46 steht so für "nicht empfangen"/"nicht quittiert"; die Binärziffer "1" eines Bits 46 steht für "empfangen"/"quittiert".

Mit der in FIG 3 verdeutlichten Quittierungsinformation 5, 45 bzw. dargestellten Bitfolge 47 sind so die Datenpakete 1 - 12, 15 - 20 sowie 27 - 29 quittiert. Andere Datenpakete, z.B. Datenpaket 13 und Datenpaket 14, sind durch die Bitfolge 47 nicht quittiert.

FIG 4 verdeutlicht den Verfahrensablauf 100 bzw. zeigt die Verfahrensabfolge 100 bei dem Kommunikationsmechanismus 60.

### (1) Initialisierung und Verbindungsaufbau zwischen dem Master-System 3 und dem Reserve-System 4 bei der redundanten Master/Reserve-Konfiguration 61 für einen Transfer 2 110

Bei einer Initialisierung der Verbindung 110 zwischen dem Master 3 und der Reserve 4 wird zunächst die maximal zulässige Größe der Anwenderdaten pro Transfer 2, beispielsweise hier eines Automatisierungszyklus, vorgegeben bzw. festgelegt oder bestimmt.

Hieraus wird die jeweilige Anzahl der erforderlichen Telegramm-/Datenpakete 1 - einer jeweiligen Übertragungsrichtung 7, 8 (vom Master 3 zur Reserve 4 bzw. umgekehrt) - ermittelt, die erforderlich sind, um die jeweiligen Nutzdaten, die in der jeweiligen Übertragungsrichtung 7, 8 (vom Master 3 zur Reserve 4 bzw. umgekehrt) zu übertragen sind, aufzunehmen.

Bei einem Verbindungsaufbau 110 zwischen dem Master- 3 und dem Reserve-System 4 wird dann festgelegt, welcher der beiden Kommunikationsteilnehmer 3, 4 aktiv bzw. zunächst passiv agiert.

In der Regel werden das Master-System 3 aktiv und das Reserve-System 4 passiv agieren.

Sowohl der aktive 3 als auch der passive Kommunikationsteilnehmer 4 gibt ein Zeitlimit für den Transfer 2 vor. Sollte innerhalb dieser Zeitspanne der Transfer 2 nicht vollständig durchgeführt worden sein, wird die logische Verbindung als "ausgefallen" gekennzeichnet und eine entsprechende Fehlermeldung zurückgegeben.

### (2) Anstoß/Beginn der bidirektionalen Datenübertragung 2 von Datenpaketen 1 durch den aktiven Teilnehmer 3 mit Bildung 121 und Sendung 122 von Datenpaketen 1 120

Der aktive Teilnehmer 3, hier beispielsweise der Master 3, ist für den Anstoß 120 der Datenübertragung 2 bzw. des Transfers 2 verantwortlich, während der zunächst passive Teilnehmer 4, hier dann die Reserve 4, wartet, bis ein erstes Datenpaket 1 vom aktiven Kommunikationsteilnehmer 3 bzw. dem Master eintrifft 4.

Ab diesem Zeitpunkt senden und empfangen beide Kommunikationsteilnehmer 3, 4, d.h. Master 3 und Reserve 4, Datenpakete 1 (vgl. FIG 2 und FIG 1) - nach dem Kommunikationsmechanismus 60 - simultan.

### (3) Simultaner Datenaustausch 2 von Datenpaketen 1 zwischen dem aktiven und dem passiven Teilnehmer 3, 4 mit Bildung 121 und Sendung 122 von Datenpaketen 1 (Erstsendung) 130

In jedem zu bildenden 121 und zu sendenden 122 Datenpaket 1 (vgl. FIG 2 und FIG 3) wird der aktuelle Status (Quittierungsinformation/-status im Quittierungsbereich) 5, 45 der bereits von der Gegenseite bei dem Transfer 2 empfangenen Datenpakete 1 eingetragen (Quittierungsinformation/-status, spezifische Paketquittungen 5, 45, vgl. FIG 3).

Jedes Datenpaket 1, das gesendet wird, enthält somit den vollständigen Quittierungsstatus 5, 45 (vgl. FIG 3) der bereits von der Gegenseite empfangenen Datenpakete 1.

Beide Kommunikationsteilnehmer 3, 4 haben demnach jederzeit Kenntnis davon, welche Datenpakete 1 in beiden (Kommunikations-)Richtungen 7, 8 bereits empfangen worden sind.

Sobald der zunächst passive Kommunikationsteilnehmer 4, d.h. hier die Reserve 4, ein erstes Datenpaket 1 vom Master 3 erhalten hat (vgl. (2) Anstoß/Beginn der bidirektionalen Datenübertragung 2 120), beginnt auch die Reserve 4 mit der Übertragung 2 ihrer für den aktiven Kommunikationsteilnehmer 3, d.h. dem Master 3, bestimmten Daten.

Der aktive Kommunikationsteilnehmer 3 bzw. der Master 4 sendet seine Datenpakete 1 - im Falle der beiden redundanten Kommunikationsverbindungen 7, 8 (vgl. FIG 1) - zunächst wechselweise über beide Kommunikationsverbindungen 7, 8.

Der passive Kommunikationsteilnehmer 4 sendet seine Datenpakete 1 über diejenige Kommunikationsverbindung 7, 8 zurück, über welche er zuletzt Datenpakete 1 empfangen hat.

Zusätzlich wird der aktive Kommunikationsteilnehmer 3 über die den Kommunikationsverbindungen 7, 8 zugeordneten Paketempfangszähler PaZ1 41, PaZ2 42(vgl. FIG 2) informiert, über welche der - in diesem Fall - beiden Kommunikationsverbindungen 7, 8 (jeweils wie viele) Datenpakete 1 empfangen worden sind.

Stellt der aktive Kommunikationsteilnehmer 3 - während des Transfers 2 - fest, dass kein Datenpaket 1 über eine der beiden redundanten Kommunikationsverbindungen 7, 8 ("gestörte" Kommunikationsverbindung) mehr empfangen worden ist (d.h., in diesem Fall würde der zugehörige Empfangszähler PaZ1 41, PaZ2 42 nicht mehr erhöht werden), so wird die andere Kommunikationsverbindung 7, 8 als sogenannte "Vorzugs-Verbindung" markiert.

Nun werden schrittweise mehr Datenpakete 1 über diese markierte "Vorzugs-Verbindung" gesendet - und entsprechend weniger Datenpakete 1 über die andere Kommunikationsverbindung. Anschaulich ausgedrückt, der Datentransfer 2 verlagert sich von der "gestörten" Kommunikationsverbindung auf die "Vorzugs-Verbindung".

Sollten weiterhin nur Datenpakete 1 über die "Vorzugs-Verbindung" empfangen werden, wird die andere Kommunikationsverbindung ("gestörte" Kommunikationsverbindung) letztendlich als "ausgefallen" markiert ("ausgefallene" Kommunikationsverbindung) und ausschließlich Datenpakete 1 über die aktive Kommunikationsverbindung, d.h. die "Vorzugs-Verbindung", transferiert. Anderenfalls werden beide Kommunikationsverbindungen 7, 8 wieder paritätisch genutzt.

Sobald einer der Kommunikationsteilnehmer 3, 4, d.h. der Master 3 oder die Reserve 4, anhand der/s Quittierungsinformation/-status 5, 45 bzw. anhand der "Quittierungs-Bits" 47 (vgl. FIG 3 und FIG 2) erkennt, dass alle von ihm zu transferierenden Datenpakete 1 des Transfers 2 vom anderen Kommunikationsteilnehmer 3, 4 empfangen worden sind, reduziert er seine Senderate, da nun lediglich die Quittungsdaten 5, 45 bzw. Empfangszähler 41, 42 (vgl. FIG 2) für den anderen Kommunikationsteilnehmer 3, 4 relevant sind.

Um die Aktualität der übertragenen Daten zu gewährleisten bzw. zu erhöhen, werden auf Seiten der beiden Kommunikationsteilnehmer 3, 4 jeweils sogenannte "Referenzpuffer" 22 verwendet. Diese "Referenzpuffer" 22 sorgen dafür, dass Daten bzw. die Datenpakete 1 erst dann "gepackt" werden 121, wenn ein jeweiliges Datenpaket 1 zur Übersendung 122 ansteht.

So kann durch einen solchen "Referenzpuffer" 22 - hier insbesondere auf Seiten des passiven Kommunikationsteilnehmers 4 - die Aktualität der vom passiven 4 zum aktiven Kommunikationsteilnehmer 3 gesendeten Daten erhöht werden. Da nämlich der passive Kommunikationsteilnehmer 4 zunächst wartet, bis ein erstes Datenpaket 1 vom aktiven Kommunikationsteilnehmer 3 eintrifft, können bestimmte Daten, z.B. ein lokaler Systemstatus, bereits veraltet sein, wenn der passive Kommunikationsteilnehmer 4 seinen Sendevorgang 122 beginnt.

Aus diesem Grund wird, anstatt die Nutz- bzw. Anwenderdaten 55 bereits vor dem Transfer 2 komplett in Datenpakete 1 zu verpacken 121, der "Referenzpuffer" 22 für ein Datenpaket 1 angegeben. In diesem Fall werden dann die Nutz- bzw. die Anwenderdaten 55 nicht bereits beim Transferaufruf 110 in die zugehörigen Datenpakete 1 kopiert 121, sondern erst dann, wenn der zunächst passive Kommunikationsteilnehmer 4 das erste Datenpaket 1 vom aktiven Kommunikationsteilnehmer 3 empfangen hat.

### (4) Automatische Sendewiederholung von nicht quittierten Datenpaketen 1 mit Bildung 121 und Sendung 122 von Datenpaketen 1 140

Sind alle Datenpakete 1 einmal (ab-)gesendet 122 worden, so werden alle noch nicht quittierten Datenpakete 1 erneut gesendet, wobei der Kommunikationsmechanismus 60 weiterhin unverändert angewendet wird.

Sind beide redundanten Kommunikationsverbindungen 7, 8 verfügbar, wird beim wiederholten Senden 140 nicht quittierter Datenpakete 1 stets die jeweilig andere - im Vergleich zur Erstsendung 130 dieses Datenpaketes 1 - Kommunikationsverbindung 7, 8 für den "Wiederholungsdatenpakettransfer" 140 gewählt.

Wurde bspw. das nicht quittierte Datenpaket 13 (Indexnummer 13, vgl. FIG 3) beim ersten Senden 130 über die erste Kommunikationsverbindung 7 abgeschickt, so wird bei der Wiederholungssendung 140 dieses Datenpakets 13 die andere Kommunikationsverbindung 8 gewählt (falls beide verfügbar).

Hierdurch gewährleistet der Kommunikationsmechanismus 60, dass insbesondere bei einer kleinen Datenpaketanzahl der Ausfall einer Kommunikationsverbindung 7, 8 nicht zu einer Verzögerung der Datenübertragung 2 bzw. der Transfers 2 führt.

Dieser automatische "Wiederholungsdatenpakettransfer" 140 nicht quittierter Datenpakete 1 führt implizit dazu, dass Kommunikationsstörungen bzw. Datenpaketverluste korrigiert werden, sofern dies im Rahmen des zulässigen Zeitlimits möglich ist.

Da auch keine separaten Quittungstelegramme bei dem Kommunikationsmechanismus 60 notwendig sind bzw. verwendet werden, ist auch keine Sonderbehandlung bei bzw. für den Verlust eines Quittungstelegramms erforderlich.

Ein schneller "Wiederholungsdatenpakettransfer" 140 nicht quittierter Datenpakete 1 reduziert die Transferzeit, insbesondere falls während der Übertragung 2 eine Kommunikationsverbindung 7, 8 ausfällt, erhöht aber auf der anderen Seite die durchschnittliche übertragene Paketanzahl.

Für eine Gesamtoptimierung der bidirektionalen Datenübertragung 2 wird letztendlich eine unter Umständen unnötige Wiederholung von einigen wenigen Datenpaketen im "Beide Verbindungen OK" - Fall toleriert, um zeitliche Verzögerungen im "Eine Verbindung ausgefallen" - Fall zu umgehen.

Zu diesem Zweck werden die Transferzeiten und Datenpaketwiederholungen mit verschiedenen Konfigurationen in der konkreten Systemkonfiguration 61 bei dem Automatisierungssystem 62 gemessen und protokolliert.

### (5) Sendung eines finalen Datenpaketes 23 und Abschluss/Beendigung des Transfers 2 150

Erkennt der aktive Kommunikationsteilnehmer 3, dass er sowohl alle Datenpakete 1 vom passiven Kommunikationsteilnehmer 4 empfangen - und quittiert hat - als auch, dass seine eigenen Datenpakete 1 vom passiven Kommunikationsteilnehmer 4 komplett quittiert worden sind, sendet er ein sogenanntes "finales" Datenpaket 23, um den erfolgreichen Abschluss des aktuellen Transfers 2 (aus Anwendersicht) dem passiven Kommunikationsteilnehmer 4 mitzuteilen 150.

Der passive Kommunikationsteilnehmer 4 beendet 150 jedoch den (aktuellen) Transfer 2 auch dann mit einem erfolgreichen Status, wenn aus seiner Sicht alle Datenpakete 1 erfolgreich gesendet bzw. empfangen worden sind, auch wenn das "finale" Paket 23 des aktiven Kommunikationsteilnehmers 3 nach einer vorgegebenen Zeitspanne von ihm nicht empfangen worden ist.

Das "finale" Datenpaket 23 wird immer über beide redundanten Kommunikationsverbindungen 7, 8 gesendet, um eine als ausgefallene erkannte Kommunikationsverbindung 7, 8 für weitere Transfers 2 wieder zu aktivieren.

Dieser Kommunikationsmechanismus 60 ermöglicht somit eine implizite Fehlererkennung bei redundanten Kommunikationsverbindungen 7, 8 bei gleichzeitiger Optimierung des Transfers 2 unter Berücksichtigung der aktuell verfügbaren Kommunikationsverbindungen 7, 8.

Die gesamte Transferzeit des - durch diesen Kommunikationsmechanismus 60 optimierten - Transfers 2 ergibt sich bei dem Kommunikationsmechanismus 60 nicht mehr durch die Addition zweier separater Transfers zwischen dem Master 3 und der Reserve 4 (mit einem Transfer pro Richtung). Sie wird im Wesentlichen durch die größere, der in eine der beiden Richtungen zwischen dem Master 3 und der Reserve 4 zu übertragenden Datenmenge bestimmt.

Die optimale Anzahl der Datenpakete 1 pro Zeiteinheit bzw. die Wartezeit nach einer vorgegebenen Anzahl an gesendeten Datenpaketen 1 hängt vom unterlagerten Kommunikationsmechanismus 9 ab und kann konfiguriert oder auch adaptiv aufgrund von konkreten Messungen angepasst werden.

Der beschriebene Kommunikationsmechanismus 60 führt so, wie beschrieben, in vorteilhafter Weise
- zu kurzen Transferzeiten für den bidirektionalen Datenaustausch durch den simultanen Transfer von Nutzdaten und Quittierungsdaten in beide Kommunikationsrichtungen,
- zu einem optimierten und effizienten Datenaustausch aufgrund nicht erforderlicher separater Quittungstelegramme und parallelem Datentransfer,
- zu einem impliziten Redundanz-Handling bei mehrfach verfügbaren Kommunikationsverbindungen ohne zusätzlichen Mehraufwand,
- zu einer optimale Nutzung der verfügbaren Kommunikationsbandbreite für die Nutzdaten,
- zu einer hohen Aktualität der Transferdaten sowie
- zu einer einfachen Realisierung aufgrund der einheitlichen Datenpaketstruktur.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung, der allein durch die Patentansprüche definiert ist, zu verlassen.

## Patentansprüche

1. Datenpaket (1) für eine bidirektionale Übertragung von Datenpaketen bei einer Datenübertragung (2) zwischen einem ersten (3) und einem zweiten Kommunikationsgerät (4), wobei das von dem ersten (3) an das zweite Kommunikationsgerät (4) übertragene Datenpaket (1)
- Nutzdaten und eine Quittierungsinformation (5) zu allen bereits zuvor von dem ersten Kommunikationsgerät (3) bei dieser Datenübertragung (2) empfangenen Datenpaketen enthält, **dadurch gekennzeichnet, dass** das Datenpaket jeweils einen Empfangszähler (41, 42) pro physikalischer Kommunikationsverbindung (7, 8) zwischen dem ersten und dem zweiten Kommunikationsgerät (3, 4) aufweist, welcher angibt, wie viele Datenpakete (1) über die jeweilige physikalische Kommunikationsverbindung (7, 8) von einem Kommunikationsgerät (3, 4) bereits empfangen worden sind.

2. Datenpaket (1) nach Anspruch 1, **dadurch gekennzeichnet, dass** die Quittierungsinformation (5, 45) in einer Bitfolge (47) codiert ist, insbesondere wobei jedes Bit (46) der Bitfolge (47) einen Quittierungsstatus (5, 45) zu einem Datenpaket (1) codiert.

3. Datenpaket (1) nach mindestens einem der vorangehenden Ansprüche, übertragen (122) nach einem Kommunikationsdienst (9), der einen Austausch von Datenpaketen mit einer festen Länge zur Verfügung stellt, insbesondere nach einer unterlagerten Kommunikation (9) entsprechend einer Schicht 2 eines OSI-Referenzmodells.

4. Datenpaket (1) nach mindestens einem der vorangehenden Ansprüche, übertragen (122) nach einem standardisierten Übertragungsprotokoll, insbesondere nach einem Ethernet-Protokoll.

5. Datenpaket (1) nach mindestens einem der vorangehenden Ansprüche, übertragen (122) zwischen dem ersten und dem zweiten Kommunikationsgerät (3, 4), wobei das erste und das zweite Kommunikationsgerät (3, 4) ein Master-System (3) und ein Reserve-System (4) bei einer Master/Reserve-Konfiguration (61), insbesondere bei einem Automatisierungssystem (62), insbesondere zur Prozesssteuerung bei einer Produktion von Gütern oder Energie, sind.

6. Datenpaket (1) nach mindestens einem der vorangehenden Ansprüche, übertragen (122) zwischen dem ersten und dem zweiten Kommunikationsgerät (3, 4), wobei das erste und das zweite Kommunikationsgerät (3, 4) über mindestens zwei redundante Kommunikationsverbindungen (7, 8) miteinander verbunden sind.

7. Verfahren (100) zur Übertragung eines Datenpakets (1) bei einer bidirektionalen Übertragung von Datenpaketen bei einer Datenübertragung (2) zwischen einem ersten (3) und einem zweiten Kommunikationsgerät (4) bei dem
- ein von dem ersten (3) an das zweite Kommunikationsgerät (4) zu übertragendes Datenpaket (1) gebildet wird (121), welches Nutzdaten und eine Quittierungsinformation (5) zu allen bereits zuvor von dem ersten Kommunikationsgerät (3) bei dieser Datenübertragung (2) empfangenen Datenpaketen enthält, **dadurch gekennzeichnet, dass** das Datenpaket jeweils einen Empfangszähler (41, 42) pro physikalischer Kommunikationsverbindung (7, 8) zwischen dem ersten und dem zweiten Kommunikationsgerät (3, 4) aufweist, welcher angibt, wie viele Datenpakete (1) über die jeweilige physikalische Kommunikationsverbindung (7, 8) von einem Kommunikationsgerät (3, 4) bereits empfangen worden sind, und
- das gebildete Datenpaket (1) von dem ersten Kommunikationsgerät (3) an das zweite Kommunikationsgerät (4) übertragen wird (122).

8. Verfahren (100) zur Übertragung eines Datenpakets (1) nach mindestens dem voranstehenden Verfahrensanspruch, eingesetzt bei der Datenübertragung (2) von einer Mehrzahl, insbesondere von einer Vielzahl, von Patenpaketen (1) zwischen dem ersten (3) und dem zweiten Kommunikationsgerät (4), wobei die Mehrzahl, insbesondere die Vielzahl, der Datenpakete (1) jeweils nach dem voranstehenden Verfahrensanspruch gebildet (121) und übertragen (122) werden.

9. Verfahren (100) zur Übertragung eines Datenpakets (1) nach mindestens dem voranstehenden Verfahrensanspruch, bei dem ein nicht quittiertes Datenpaket (1) nach seiner Erstsendung (130) bei der Datenübertragung (2) erneut gesendet wird (140), insbesondere wobei im Falle mehrerer physikalischer Kommunikationsverbindungen (7, 8) zwischen dem ersten (3) und dem zweiten Kommunikationsgerät (4) die erneute Sendung (140) des nicht quittierten Datenpaketes (1) über eine andere physikalische Kommunikationsverbindung (7, 8) als bei der Erstsendung (130) erfolgt.

10. Verfahren (100) zur Übertragung eines Datenpakets (1) nach mindestens dem voranstehenden Verfahrensanspruch, bei dem das nicht quittierte Datenpaket (1) erst dann erneut gesendet wird (140), wenn alle Datenpakte (1) der Datenübertragung (2) zuvor ein erstes Mal gesendet wurden (130).

11. Verfahren (100) zur Übertragung eines Datenpakets (1) nach mindestens einem der drei voranstehenden Verfahrensansprüche, bei dem, wenn alle Datenpakete (1) der Datenübertragung (2) von den Kommunikationsgeräten (2) empfangen wurden, ein finales Datenpaket (23) von dem ersten (3) zu dem zweiten Kommunikationsgerät (4) gesendet wird, insbesondere, dass im Falle mehrerer das erste (3) mit dem zweiten Kommunikationsgerät (4) verbindenden Kommunikationsverbindungen (7, 8), das finale Datenpaket (23) über alle diese mehreren Kommunikationsverbindungen (7, 8) gesendet wird.

12. Verfahren (100) zur Übertragung eines Datenpakets (1) nach mindestens einem der voranstehenden Verfahrensansprüchen, unterlagert mit einem Kommunikationsdienst (9), der einen Austausch von Datenpaketen mit einer festen Länge zur Verfügung stellt, insbesondere mit einer unterlagerten Kommunikation (9) entsprechend einer Schicht 2 (Sicherungsschicht, Data Link) eines OSI-Schichtenmodells.

13. Verfahren (100) zur Übertragung eines Datenpakets (1) nach mindestens einem der voranstehenden Verfahrensansprüchen, bei dem das Datenpaket (1) von einem Kommunikationsgerät (3, 4) erst dann gebildet wird (121), wenn ein von dem anderen Kommunikationsgerät (3, 4) an das Kommunikationsgerät (3, 4) gesendetes, insbesondere gesendetes erstes, Datenpaket (1) dort angekommen ist, insbesondere bei dem das Datenpaket (1) von einem passiven Kommunikationsgerät (4) erst gebildet wird (121), wenn ein von einem aktiven Kommunikationsgerät (3) an das passive Kommunikationsgerät (4) gesendetes, insbesondere gesendetes erstes, Datenpaket (1) dort angekommen ist.

## Claims

1. Data packet (1) for bidirectional transmission of data packets during data transmission (2) between a first (3) and a second (4) communication appliance, wherein the data packet (1) transmitted from the first (3) to the second (4) communication appliance
- contains useful data and a piece of acknowledgement information (5) relating to all data packets already previously received by the first communication appliance (3) during said data transmission (2), **characterized in that** the data packet has one reception counter (41, 42) per physical communication link (7, 8) between the first and the second communication appliance (3, 4), which reception counter indicates how many data packets (1) have already been received by a communication appliance (3, 4) via the respective physical communication link (7, 8).

2. Data packet (1) according to Claim 1 **characterized in that** the piece of acknowledgement information (5, 45) is coded in a bit string (47), particularly wherein each bit (46) in the bit string (47) codes an acknowledgement status (5, 45) relating to a data packet (1).

3. Data packet (1) according to at least one of the preceding claims, transmitted (122) on the basis of a communication service (9) that provides interchange of data packets having a fixed length, particularly on the asis of subordinate communication (9) in accordance with a layer 2 of an OSI reference model.

4. Data packet (1) according to at least one of the preceding claims, transmitted (122) on the basis of a standardized transmission protocol, particularly on the basis of an Ethernet protocol.

5. Data packet (1) according to at least one of the preceding claims, transmitted (122) between the first and the second communication appliance (3, 4), wherein the first and the second communication appliance (3, 4) are a master system (3) and a reserve system (4) in a master/reserve configuration (61), particularly in an automation system (62), particularly for process control during production of goods or energy.

6. Data packet (1) according to at least one of the preceding claims, transmitted (122) between the first and the second communication appliance (3, 4), wherein the first and the second communication appliance (3, 4) are connected to one another by means of at least two redundant communication links (7, 8).

7. Method (100) for transmitting a data packet (1) during bidirectional transmission of data packets during data transmission (2) between a first (3) and a second (4) communication appliance, in which
- a data packet (1) to be transmitted from the first (3) to the second (4) communication appliance is formed (121) that contains useful data and a piece of acknowledgement information (5) relating to all data packets already previously received from the first communication appliance (3) during said data transmission (2), **characterized in that** the data packet has one reception counter (41, 42) per physical communication link (7, 8) between the first and the second communication appliance (3, 4), which reception counter indicates how many data packets (1) have already been received by a communication appliance (3, 4) via the respective physical communication link (7, 8), and
- the data packet (1) formed is transmitted (122) from the first communication appliance (3) to the second communication appliance (4).

8. Method (100) for transmitting a data packet (1) according to at least the preceding method claim, used during the data transmission (2) of a plurality, particularly of a multiplicity, of data packets (1) between the first (3) and the second (4) communication appliance, wherein the plurality, particularly the multiplicity, of data packets (1) are respectively formed (121) and transmitted (122) according to the preceding method claim.

9. Method (100) for transmitting a data packet (1) according to at least the preceding method claim, in which an unacknowledged data packet (1) is resent (140) after its initial sending (130) during the data transmission (2), particularly wherein if there are a plurality of physical communication links (7, 8) between the first (3) and the second (4) communication appliance then the resending (140) of the unacknowledged data packet (1) is effected using a different physical communication link (7, 8) than for the initial sending (130).

10. Method (100) for transmitting a data packet (1) according to at least the preceding method claim, in which the unacknowledged data packet (1) is resent (140) only when all data packets (1) from the data transmission (2) have previously been sent (130) a first time.

11. Method (100) for transmitting a data packet (1) according to at least one of the three preceding method claims, in which when all data packets (1) from the data transmission (2) have been received by the communication appliances (3, 4), a final data packet (23) is sent from the first (3) to the second (4) communication appliance, particularly wherein if there are a plurality of communication links (7, 8) connecting the first (3) to the second (4) communication appliance then the final data packet (23) is sent using all of said plurality of communication links (7, 8).

12. Method (100) for transmitting a data packet (1) according to at least one of the preceding method claims, having a subordinate communication service (9) that provides interchange of data packets having a fixed length, particularly having subordinate communication (9) in accordance with a layer (2) (data link layer) of an OSI layer model.

13. Method (100) for transmitting a data packet (1) according to at least one of the preceding method claims, in which the data packet (1) is formed (121) by a communication appliance (3, 4) only when a data packet (1) sent from the other communication appliance (3, 4) to the communication appliance (3, 4), particularly a first sent data packet, has arrived therein, particularly in which the data packet (1) is formed (121) by a passive communication appliance (4) only when a data packet (1) sent from an active communication appliance (3) to the passive communication appliance (4), particularly a first sent data packet, has arrived therein.

## Revendications

1. Paquet (1) de données pour une transmission bidirectionnelle de paquets de données lors d'une transmission (2) de données entre un premier (3) et un deuxième appareils (4) de communication, dans lequel le paquet (1) de données, transmis du premier (3) au deuxième appareil (4) de communication, comporte
- des données utiles et une information (5) d'accusé de réception pour tous les paquets de données reçus déjà auparavant du premier appareil (3) de communication dans cette transmission (2) de données,
**caractérisé en ce que** le paquet de données a respectivement un compteur (41, 42) de réception par liaison (7, 8) physique de communication entre le premier et le deuxième appareils (3, 4) de communication, qui indique combien de paquets (1) de données ont été déjà reçus d'un appareil (3, 4) de communication par la liaison (7, 8) physique respective de communication.

2. Paquet (1) de données suivant la revendication 1, **caractérisé en ce que** l'information (5, 45) d'accusé de réception est codée suivant une séquence (47) de bit, dans lequel notamment chaque bit (46) de la séquence (47) de bit code un état (5, 45) d'accusé de réception d'un paquet (1) de données.

3. Paquet (1) de données suivant au moins l'une des revendications précédentes, transmis (122) par un service (9) de communication, qui met à disposition un échange de paquets de données d'une longueur fixe, notamment par une communication (9) sous-jacente correspondant à une couche (2) d'un modèle de référence OSI.

4. Paquet (1) de données suivant au moins l'une des revendications précédentes, transmis (122) suivant un protocole de transmission normalisé, notamment suivant le protocole Ethernet.

5. Paquet (1) de données suivant au moins l'une des revendications précédentes, transmis (122) entre le premier et le deuxième appareils (3, 4) de communication, dans lequel le premier et le deuxième appareils (3, 4) de communication sont un système (3) maître et un système (4) de réserve dans une configuration (61) maître/réserve, notamment dans un système (62) d'automatisation, notamment de commande de processus lors d'une production de marchandises ou d'énergie.

6. Paquet (1) de données suivant au moins l'une des revendications précédentes, transmis (122) entre le premier et le deuxième appareils (3, 4) de communication, dans lequel le premier et le deuxième appareils (3, 4) de communication sont reliés entre eux par au moins deux liaisons (7, 8) redondantes de communication.

7. Procédé (100) de transmission d'un paquet (1) de données lors d'une transmission bidirectionnelle de paquets de données lors d'une transmission (2) de données entre un premier (3) et un deuxième appareils (4) de communication, dans lequel
- on forme (121) un paquet (1) de données à transmettre du premier (3) au deuxième appareil (4) de communication, paquet (1) de données, qui contient des données utiles et une information (5) d'accusé de réception de tous les paquets de données reçus déjà auparavant du premier appareil (3) de communication lors de cette transmission (2) de données, **caractérisé en ce que** le paquet de données a respectivement un compteur (41, 42) de réception par liaison (7, 8) physique de communication entre le premier et le deuxième appareils (3, 4) de communication, qui indique combien de paquets (1) de données ont été déjà reçus d'un appareil (3, 4) de communication par la liaison (7, 8) physique respective de communication et
- on transmet (122) le paquet (1) de données formé du premier appareil (3) de communication au deuxième appareil (4) de communication

8. Procédé (100) de transmission d'un paquet (1) de données suivant au moins l'une des revendications de procédé précédentes, utilisé lors de la transmission (2) de données d'une multiplicité, notamment d'une pluralité de paquets (1) de données entre le premier (3) et le deuxième appareils (4) de communication, dans lequel on forme (121) et on transmet (122) la multiplicité, notamment la pluralité des paquets (1) de données, respectivement suivant la revendication de procédé précédente.

9. Procédé (100) de transmission d'un paquet de données suivant au moins la revendication de procédé précédente, dans lequel on envoie à nouveau, lors de la transmission (2) de données, un paquet (1) de données dont on n'a pas reçu l'accusé de réception après son premier envoi (130), notamment dans lequel, dans le cas de plusieurs liaisons (7, 8) de communication physique entre le premier (3) et le deuxième appareils (4) de communication, l'envoi (140) renouvelé du paquet (1) de données, dont il n'a pas été accusé réception, s'effectue par une liaison (7, 8) de communication physique autre que lors du premier envoi (130).

10. Procédé (100) de transmission d'un paquet de données suivant au moins l'une des revendications de procédé précédentes, dans lequel on envoie à nouveau le paquet (1) de données, dont il n'a pas été accusé réception, que si tous les paquets (1) de données de la transmission (2) de données ont été envoyés (130) auparavant une première fois.

11. Procédé (100) de transmission d'un paquet de données suivant au moins l'une des trois revendications de procédé précédentes, dans lequel, si tous les paquets (1) de données de la transmission (2) de données ont été reçus par les appareils (2) de communication, on envoie un paquet (23) de données final du premier (3) au deuxième appareil au deuxième appareil (4) de communication, notamment en ce que, dans le cas de plusieurs liaisons (7, 8) de communication reliant le premier (3) au deuxième appareil (4) de communication, on envoie le paquet (23) de données final par toutes ces plusieurs liaisons (7, 8) de communication.

12. Procédé (100) de transmission d'un paquet de données suivant au moins l'une des revendications de procédé précédentes, supporté par un service (9) de communication, qui met à disposition un échange de paquets de données d'une longueur fixe, notamment par une communication (9) sous-jacente correspondant à une couche (couche sécurisée data link) d'un modèle de couche OSI.

13. Procédé (100) de transmission d'un paquet de données suivant au moins l'une des revendications de procédé précédentes, dans lequel on ne forme (121) le paquet (1) de données par un appareil (3, 4) de communication que s'il y est arrivé un paquet (1) de données envoyé, notamment un premier paquet (1) de données envoyé de l'autre appareil (3, 4) de communication à l'appareil (3, 4) de communication, notamment dans lequel on ne forme (121) le paquet (1) de données d'un appareil (4) de communication passif que s'il y est arrivé un paquet (1) de données envoyé, notamment un premier paquet (1) de données envoyé, d'un appareil (3) de communication actif à l'appareil (4) de communication passif.
